# EUROPEAN PATENT APPLICATION

(11) **EP 2 683 148 A1**
(43) Date of publication of application: **08.01.2014**
(21) Application number: 11863249.6
(22) Date of filing: 22.06.2011
(51) Int. Cl.: H04M 3/51, H04M 3/42

(54) **AGENT SYSTEM, AGENT SYSTEM CLIENT TERMINAL AND PROCESSING METHOD**

(30) Priority: 06.04.2011 CN 201110085581
(71) Applicant: ZTE Corporation, Shenzhen, Guangdong 518057 (CN)
(72) Inventor: LAI, Yongsen, Guangdong 518057 (CN); DU, Xueming, Guangdong 518057 (CN); QIAN, Ronghua, Guangdong 518057 (CN)
(74) Representative: Protector IP Consultants AS
(86) International application number: PCT/CN2011/076105
(87) International publication number: WO 2012/136020

(57) **Abstract**

The present document discloses a client terminal of an agent system, and the client terminal includes an agent webpage interface module and a background service module, wherein, the agent webpage interface module is configured to provide a human-computer interaction agent webpage interface, and interact with the background service module through the Hyper Text Transfer Protocol (HTTP); the background service module is configured to receive an HTTP request of the agent webpage interface module, and analyze, then encapsulate and send the HTTP request to the service terminal of the agent system, and receive message of the service terminal of the agent system, analyze, encapsulate and then send the message of the service terminal of the agent system to the agent webpage interface module through the HTTP. The present document further discloses a processing method for a client terminal of an agent system and an agent system. The present document meets the user requirement on multiple operation systems and multiple browsers of the WEB agent.

## Description

### Technical Field

The present document relates to the mobile communication system, and in particular, to an agent system, a client terminal of an agent system and a processing method thereof.

### Background of the Related Art

At present, the call center webpage (WEB) agent mainly adopts the ActiveX control mode to realize the telephone traffic control and event transmitting and receiving to realize the function of the agent. But this mode has a great limitation, that is, it must be based on the WINDOWS operating system and the IE browser, while other operating systems (such as but not limited to LINUX and UNIX, etc.) and browsers (such as but not limited to FIREFOX, Google browser and Maxthon browser, etc.) cannot be supported. Therefore, the current webpage agent cannot meet the user requirement on multiple operating systems and browsers.

### Summary of the Invention

The objective of the present document is to provide an agent system, a client terminal of an agent system and a processing method thereof to solve the problem that the related art is unable to meet the requirement on the multiple operating systems and multiple browsers of users.

In order to solve the above-mentioned problem, the present document provides a client terminal of an agent system, wherein, the client terminal comprises an agent webpage interface module and a background service module, wherein,
the agent webpage interface module is configured to provide a human-computer interaction agent webpage interface, and interact with the background service module through a Hyper Text Transfer Protocol (HTTP); and
the background service module is configured to receive an HTTP request from the agent webpage interface module, analyze, and then encapsulate and send the HTTP request to a service terminal of the agent system, and receive message from the service terminal of the agent system, analyze, encapsulate and then send the message from the service terminal of the agent system to the agent webpage interface module through the HTTP.

In the above-mentioned client terminal, the agent webpage interface module is further configured to: send an HTTP request used for requesting application service information to the service terminal of the agent system, and receive the application service information returned by the service terminal of the agent system.

In the above-mentioned client terminal, the agent webpage interface module is further configured to: perform agent webpage interface rendering according to the text markup language information when the received application service information is hypertext markup language information.

In the above-mentioned client terminal, the background service module is further configured to: call local resources according to the HTTP request of the agent webpage interface module.

In the above-mentioned client terminal, the agent webpage interface module is realized based on webpage client terminal technology.

In order to solve the above-mentioned problem, the present document further provides a processing method for a client terminal of an agent system, comprising:
an agent webpage interface module interacting with agent personnel through an agent webpage interface;
the agent webpage interface module interacting with a background service module through a Hyper Text Transfer Protocol (HTTP); and
the background service module analyzing, and encapsulating and then sending the HTTP request from the agent webpage interface module to a service terminal of the agent system, and analyzing, encapsulating and then sending message from the service terminal of the agent system to the agent webpage interface module through the HTTP.

The method further comprises: the agent webpage interface module sending an HTTP request used for requesting application service information to the service terminal of the agent system, and receiving the application service information returned by the service terminal of the agent system.

The method further comprises: the background service module receiving the HTTP request of the agent webpage interface module and calling local resources.

In the above-mentioned method: the agent webpage interface module is realized based on webpage client terminal technology.

In order to solve the above-mentioned problem, the present document provides an agent system which comprises a client terminal as described above and further comprises a service terminal.

The existing system has the following defects: enslaved to relying on the WINDOWS operating system and the IE browser, unable to cross the operating systems and unable to support the dominant browsers well. Compared with the related art, the present document adopts the browser / server (B/S) framework, performs communication based on the Hypertext Transfer Protocol (HTTP), and realizes that the WEB agent has nothing to do with the operating system and the browser, which makes the WEB agent upgrade and maintenance convenient, further improves the user experience, meets the user requirement, and is beneficial to the realization and popularization of the agent, such as mobile agent and home agent, etc at the same time.

### Brief Description of Drawings

FIG. 1 is a structure diagram of an agent system according to an embodiment of the present document;
FIG. 2 is a diagram of agent system module interaction according to an embodiment of the present document;
FIG. 3 is a diagram of an agent system interaction flow according to an embodiment of the present document.

### Preferred Embodiments of the Invention

In order to make the objective, technical scheme and advantage of the present document much more clear and obvious, the embodiment of the present document is described in detail with reference to the accompanying drawings hereinafter. It should be illustrated that, in the case of not conflicting, the embodiments in the present application and features in these embodiments can be combined with each other.

The client terminal of the embodiment of the present document includes an agent webpage interface module and a background service module, wherein, the agent webpage interface module and the background service module perform communication through a Hyper Text Transfer Protocol (HTTP), which has avoided the limitation by the operating system and the browser.

The agent system provided by the embodiment of the present document includes a client terminal and a service terminal, wherein, the client terminal includes an agent webpage interface module and a background service module, wherein,
the agent webpage interface module is configured to provide a human-computer interaction agent webpage interface;
wherein, the agent webpage interface module can adopt the WEB client terminal technology to realize the graphical interfaces for operating by the users.

The background service module is configured to: run a service in the background and communicate with the agent webpage interface module through the HTTP, receive an HTTP request from the agent webpage interface module, analyze the HTTP request, and then encapsulate and send the HTTP request to the service terminal of the agent system, and receive message from the service terminal of the agent system, analyze, encapsulate and then send the message from the service terminal of the agent system to the agent webpage interface module through the HTTP.

Wherein, the agent webpage interface module is further configured to: send an HTTP request used for requesting application service information to the service terminal of the agent system, and receive the application service information returned by the service terminal of the agent system. The agent webpage interface module performs agent webpage interface rendering according to the text markup language information when the application service information is hypertext markup language information.

Wherein, the background service module is further configured to: call local resources according to the request of the agent webpage interface module.

The service terminal mainly includes an application server and a platform, wherein:
the application server is configured to: provide the WEB agent-related application service, etc. besides providing the most fundamental WEB service of the WEB agent; and return the corresponding application service information when receiving the HTTP request of the agent webpage interface module, for example, returning Hyper Text Mark-up Language (HTML).

The platform is mainly configured to: realize the telephone traffic processing, such as, telephone accessing and queuing, etc., and the media function, etc., which can refer to the platform function of the existing agent system.

The embodiment of the present document further provides a processing method for a client terminal of an agent system, including:
an agent webpage interface module interacting with agent personnel through an agent webpage interface;
the agent webpage interface module interacting with a background service module through a Hyper Text Transfer Protocol (HTTP); and
the background service module analyzing, and encapsulating the HTTP request from the agent webpage interface module and then sending the HTTP request to a service terminal of the agent system, and analyzing and encapsulating message from the service terminal of the agent system and then sending the message from the service terminal of the agent system to the agent webpage interface module through the HTTP.

The method can further include: the background service module receiving the message of the service terminal of the agent system, analyzing, encapsulating, and then sending the message sent by the service terminal of the agent system to the agent webpage interface module through the HTTP.

The method can further include: the agent webpage interface module sending an HTTP request used for requesting application service information to the service terminal of the agent system, and receiving the application service information returned by the service terminal of the agent system.

The method can further include: the background service module receiving the HTTP request of the agent webpage interface module and calling local resources.

The embodiment of the present document is described in detail with reference to the accompanying drawings hereinafter.

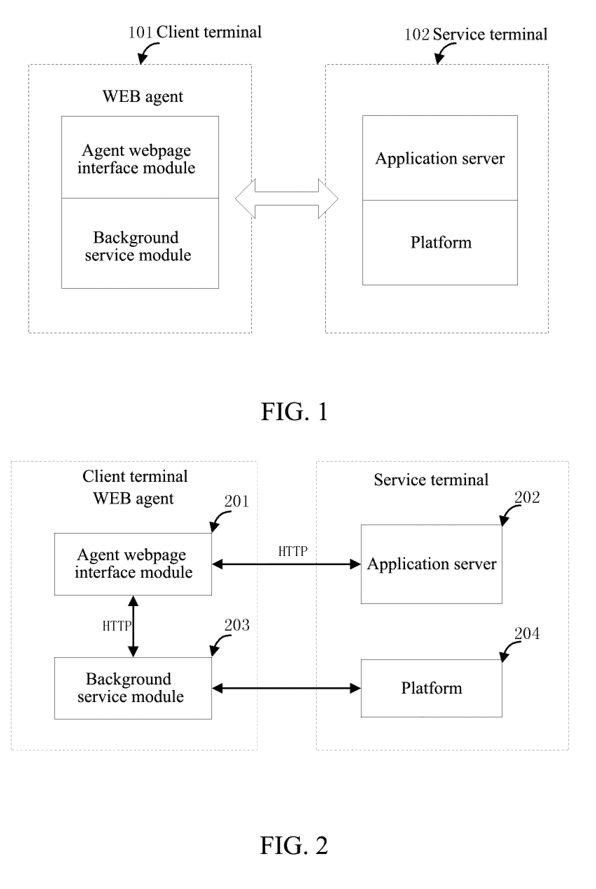

The agent system provided by the present document is shown in FIG. 1, and the system includes a client terminal 101 and a service terminal 102. Wherein:
the client terminal 101 mainly includes two sub-modules: an agent webpage interface module and a background service module, wherein, the agent webpage interface module and the background service module perform the communication through the HTTP.

The agent webpage interface module is configured to: adopt the WEB client terminal technology, such as but not limited to HTML, JAVASCRIPT and VBSCRIPT, etc., realize the WEB interface for the human-computer interaction, and realize the agent status control, the telephone traffic logic processing and control, and relevant service processing of the call center. The agent webpage interface module is capsulated with the HTTP message interface, and in addition provides an external interface, which can perform the secondary development of the relevant service on the basis of the agent.

The background service module can be realized by adopting the programming languages such as but not limited to java and c, etc., (for example, java can be adopted to realize the cross-platform), and integrates with the lightweight Web server; and the background service module is configured to: receive the interface HTTP request, analyze and then encapsulate the HTTP request again and interacts with the platform; and call the local resources according to the request of the agent webpage interface module, such as: local file operation, sound card and camera control, etc.

The service terminal 102 includes an application server and a platform, wherein:
the application server mainly includes a WEB server, and the WEB server is mainly configured to: release the WEB agent and the application service;
the platform is configured to: realize the telephone traffic processing, such as, calling in and calling out and queuing, etc., and the media processing, such as, video, etc., which can refer to the existing call center platform system, and the function is no longer enumerated.

The message flow of each module and its sub-module is shown in FIG. 2, and the flow includes the following steps:
In S201, the agent personnel opens the WEB agent in the browser, including all agent WEB interfaces, starts to receive and respond to the background service module message through the HTTP, and initiates the HTTP request to the background service module actively at the same time;
In S202, the application server of the service terminal receives the HTTP request of the client terminal and returns the HTML information, and the browser completes the agent WEB interface rendering according to the HTML information;
In S203, the background service module 203 receives the HTTP request sent by the agent webpage interface module 201, converts the protocol and recombines the message, and sends the HTTP request after conversion and recombination to the platform 204, and responds to the message of the platform 204 at the same time; the HTTP request is sent to the agent webpage interface module 201 through the HTTP after the protocol is converted and the message recombined;
In S204, the platform 204 receives the message sent by the background service module 203, starts setting up the telephone traffic link and media processing, etc.; and also responds to the incoming call initiated by the user terminal at the same time, sends message to the background service module of the idle agent after queuing, and inserts the call into the agent.

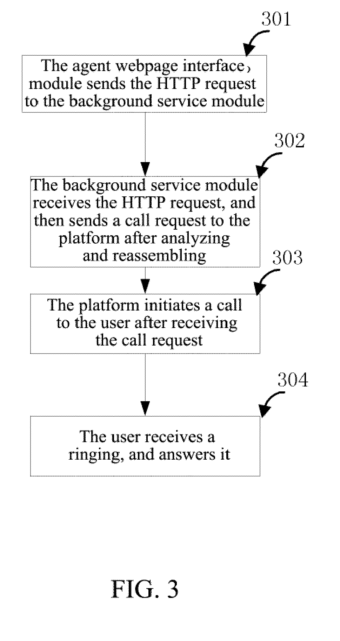

The relevant flow of processing the telephone traffic in the present system is described by taking the calling in and calling out as an example, as shown in FIG. 3, the flow includes the following steps:
In Step 301, a calling out interface in the agent WEB interface is entered, a calling operation is initiated to the target number, and the agent webpage interface module assembles the HTTP message and initiates the HTTP request to the background service module;
In Step 302, the background service module receives the HTTP request, reassembles an inside message after analyzing and sends a call request to the platform;
In Step 303, the platform initiates a call to the user after receiving the call request;
In Step 304, the user receives an incoming call ringing, and sets up a conversation with the agent after answering.

The flow of calling in is a reverse process of calling out on the contrary.

The embodiment of the present document realizes the agent system on the basis of the HTTP, because all systems and browsers are basically based on the HTTP, thus realizing cross-system and browser.

Obviously, it can be understood by those skilled in the art that each module or each step above-mentioned in the present document can be implemented by universal calculating apparatus, and they can be integrated in a single calculating apparatus, or distributed in the network constituted by a plurality of calculating apparatus. Alternatively, they can be implemented by the executable program codes of the calculating apparatus. Accordingly, they can be stored in the storage apparatus and implemented by the calculating apparatus, or they are made as individual integrated circuit modules respectively, or a plurality of modules or steps therein are made into the single integrated circuit module to be implemented. In this way, the present document is not limit to any specific form of the combination of the hardware and software.

### Industrial Applicability

The present document adopts the HTTP communication, and realizes that the WEB agent has nothing to do with the operating system and the browser, which makes the WEB agent upgrade and maintenance convenient, further improves the user experience, meets the user requirement, and is beneficial to the realization and popularization of the agent, such as mobile agent and home agent, etc at the same time.

## Claims

1. A client terminal of an agent system, wherein, the client terminal comprises an agent webpage interface module and a background service module, wherein,
the agent webpage interface module is configured to provide a human-computer interaction agent webpage interface, and interact with the background service module through a Hyper Text Transfer Protocol (HTTP); and
the background service module is configured to receive an HTTP request from the agent webpage interface module, analyze, and then encapsulate and send the HTTP request to a service terminal of the agent system, and receive message from the service terminal of the agent system, analyze, encapsulate and then send the message from the service terminal of the agent system to the agent webpage interface module through the HTTP.

2. The client terminal according to claim 1, wherein, the agent webpage interface module is further configured to: send an HTTP request used for requesting application service information to the service terminal of the agent system, and receive application service information returned by the service terminal of the agent system.

3. The client terminal according to claim 2, wherein, the agent webpage interface module is further configured to: perform agent webpage interface rendering according to text markup language information when the received application service information is hypertext markup language information.

4. The client terminal according to claim 1, wherein, the background service module is further configured to: call local resources according to the HTTP request of the agent webpage interface module.

5. The client terminal according to claim 1, wherein, the agent webpage interface module is realized based on webpage client terminal technology.

6. A processing method for a client terminal of an agent system, comprising:
an agent webpage interface module interacting with agent personnel through an agent webpage interface;
the agent webpage interface module interacting with a background service module through a Hyper Text Transfer Protocol (HTTP); and
the background service module analyzing, and encapsulating and then sending the HTTP request from the agent webpage interface module to a service terminal of the agent system, and analyzing, encapsulating and then sending message from the service terminal of the agent system to the agent webpage interface module through the HTTP.

7. The method according to claim 6, further comprising: the agent webpage interface module sending an HTTP request used for requesting application service information to the service terminal of the agent system, and receiving the application service information returned by the service terminal of the agent system.

8. The method according to claim 6, further comprising: the background service module receiving the HTTP request of the agent webpage interface module and calling local resources.

9. The method according to any one of claims 6 to 8, wherein, the agent webpage interface module is realized based on webpage client terminal technology.

10. An agent system, comprising a client terminal described in any one of claims 1 to 5, and further comprising a service terminal.
